# EUROPEAN PATENT APPLICATION

(11) **EP 4 645 059 A1**
(43) Date of publication of application: **05.11.2025**
(21) Application number: 24173499.5
(22) Date of filing: 30.04.2024
(51) Int. Cl.: G06F 3/12

(54) **METHOD FOR LABELLING PRINT JOBS AND A PRINTER THEREFOR**

(71) Applicant: Canon Production Printing Holding B.V., 5914 HH Venlo (NL)
(72) Inventor: KERSEMAKERS, Robbie, Venlo (NL); GERRITS, Antonius M, Venlo (NL); DE JONG, Frederik, Venlo (NL)
(74) Representative: Canon Production Printing IP Department

(57) **Abstract**

A printer and a method for labelling print jobs to be printed by the printer configured to output stacks of printed print media and comprising a print controller comprising a print job waiting room and a print job queue. Each print job is received in the print job waiting room or the print job queue. Each print job has a print job ticket with print job properties. For each print job at least one digital label item is established which is used to create a group of print jobs. The at least one digital label item is added to the print job ticket. For at least one set of at least one digital label item at least one output stack of print media is composed for print jobs in the print job waiting room or print job queue having at least one same set of the at least one digital label item. A time sequence order of composed output stacks for printing by the printer is determined based on the digital label items, and the output stacks are printed in the determined time sequence order.

## Description

### BACKGROUND OF THE INVENTION

### 1. Field of the invention

The present invention relates to a method for labelling print jobs to be printed by a printer configured to output stacks of printed print media and comprising a print controller comprising a print job waiting room and a print job queue. The printer has at least one input channel for receiving print jobs.

The verb "labelling" used hereinafter is deemed to be equivalent to the verb "labeling" and the verb "tagging".

### 2. Description of Background Art

Currently a print work cell often performs last minute optimization on the sequence and batches of print jobs to be printed. There is however during this optimization little information available at the printer on subsequent postprocessing for steering the optimizations. For example, which job would need the longest postprocessing, has the same postprocessing or has tightest delivery agreements (SLAs) is not immediately known. The little information results in printed stacks with print jobs to often be resorted, in a next work cell, whilst the output of the printer could already have been optimized to the work in the next work cell.

Until now the operator looked into other systems away from the printer, for extra information (e.g. an MIS).

In a flexible semi-automated workflow the customer system or the operator submits print jobs in a FIFO ("First In First Out") sequence that could but often does not resemble an optimal stack. The operator can manually sort jobs on typically on substrate parameters to compose an output stack to produce. However, other parameters are often not applied in the operator work cell, to optimize for next work cells, e.g. to handle applications with longest finishing time first. The operator can produce the batches based on his own made sorting. Sometimes a person has to re-sort the whole output stack after production to categorize on finishing. Sometimes a stack of completely mixed media is printed or just when the pallet is full, the stack goes to the next work cell. Operator instructions may differ from shift to shift.

In a standard automated workflow the customer system creates batches. The customer system can submit jobs, as basic queue entries to be worked through according to the FIFO principle. The operator alters batches minimally, and does just produce output. Usually a printer is dedicated to only a few selected applications. Old scheduling logic cannot be optimized for new scheduling challenges. The operator needs to check manually how much content fits into a post-processing machine.

### SUMMARY OF THE INVENTION

It is an object of the invention to provide a method which supports the operator or planner in optimizing the composition of the output stacks in a flexible semi-automated workflow as well as in a standard automated workflow while taking a workflow after printing into account.

In accordance with the present invention, the method comprises the steps of for each print job
- receiving the print job in the print job waiting room or the print job queue, the print job having a print job ticket with print job properties,
- establishing at least one digital label item for the print job, the at least one digital label item being used to create a group of print jobs,
- adding the at least one established digital label item to the print job ticket, and

for at least one set of at least one digital label item
   - composing at least one output stack of print media for print jobs in the print job waiting room or print job queue having at least one same set of the at least one digital label item, and
determining a time sequence order of composed output stacks for printing by the printer based on the digital label items, and printing the output stacks in the determined time sequence order.

By doing so, the print jobs are labelled with the digital label items at the digital input channels of the printer, or in a user interface of the printer, with the labels capturing information of for example postprocessing steps or service level agreements relevant for certain print jobs. The digital label items may be used in filtering, sorting, reordering print jobs for the print job queue, or even before they reach the print job queue, e.g. in the print job waiting room.

The customer is allowed to add extra digital label items to print jobs in the input channel. The digital label items may be free text, resembling info on workflows steps beyond the printing process. Digital label items are just textual labels, while the printer does not know any background of interpreting the digital label items semantically, e.g. a duration express in a digital label item. The labelling may be done on all input channels of the printer and even be linked to print job templates or print job tickets. Digital label items may be used as grouping or filter criterions in the user interface windows comprising a representation of the print job waiting room. Semantically a customer may for example express a long and short post process stage by using two different digital label items. Multiple digital label items are allowed per print job, for example if there is more than one post-processing step involved in the workflow after printing or when besides a post-processing step a kind of transport has to be selected from a plurality of transport manners or routes.

According to the method of the present invention the relevant decision making information is now for example available on the printer user interface, and prevents operators from needing to gather information from everywhere to make the good optimizations in one go. Thereby, the object of the present invention has been achieved.

More specific optional features of the invention are indicated in the dependent claims.

According to an embodiment the step of determining a time sequence order of composed output stacks for printing by the printer based on the digital label items comprises the sub-step of keeping composed output stacks having at least one same digital label item together. According to a further embodiment the method comprises the step of keeping print jobs having a same digital label item together during print job queue manipulation.

According to an embodiment the step of establishing the at least one digital label item comprises the sub-step of setting the at least one digital label item by means of an automated workflow. The print controller may have for example in storage a collection of digital label items which can be used in the automated workflow.

According to an embodiment the step of establishing the at least one digital label item comprises a sub-step of taking a post-processing action of the print job, a post-processing device for executing the post-processing action of the print job, an end product of the print job, an application type of the end product, a service level agreement and/or an internet source from which a print job is submitted, into account.

According to an embodiment the step of establishing the at least one digital label item comprises a sub-step of taking a duration of a post-processing action and/or a transport for the print job into account.

According to an embodiment the step of determining the time sequence order of output stacks comprises a sub-step of entering an output stack which needs to be post-processed with a particular post-processing duration in time before an output stack which needs to be post-processed with a shorter post-processing duration than the particular post-processing duration, in the time sequence order of output stacks.

According to an embodiment the step of determining the time sequence order of output stacks comprises a sub-step of entering an output stack which needs to be transported or delivered with a particular transport or delivery duration in time before an output stack which needs to be transported or delivered with a shorter transport or delivery duration than the particular transport or delivery duration, in the time sequence order of output stacks.

According to an embodiment the step of establishing the at least one digital label item comprises the sub-step of receiving the at least one digital label item via a user interface of the printer.

According to an embodiment the step of establishing the at least one digital label item comprises the sub-step of the print controller automatically determining the at least one digital label item based on the print job properties in the print job ticket.

According to an embodiment the method comprises the step of messaging a user to provide an advice or warning regarding the determined time sequence order of composed output stacks for printing by the printer based on the digital label items. Sometimes a determined time sequence order is selected from a plurality of possible outcomes by the print controller. It may be that another time sequence order is preferred by the operator above the determined time sequence order. A message may also be that there is a conflict to be dealt with by the operator. The conflict may be related to the different print media, the choice of the digital label items, the kind of postprocessing, the kind of transport after printing, etc. According to a further embodiment the step of messaging a user comprises a sub-step of applying a rule-based system to determine the appropriate advice or warning. The rule-based system may be installed in the print controller of the printer or in an external computer connected to the printer.

The present invention also relates to a printer configured to output stacks of printed print media and comprising a print controller comprising a print job waiting room and a print job queue, wherein the print controller is configured to perform the steps of a method according to the present invention.

The present invention also relates to a computer program product, including computer readable code embodied on a computer readable medium, said computer readable code comprising instructions for executing the steps of a method according to the present invention by means of a printer according to the present invention.

Further scope of applicability of the present invention will become apparent from the detailed description given hereinafter. However, it should be understood that the detailed description and specific examples, while indicating preferred embodiments of the present invention, are given by way of illustration only, since various changes and modifications within the spirit and scope of the present invention will become apparent to those skilled in the art from this detailed description.

### BRIEF DESCRIPTION OF THE DRAWINGS

The present invention will become more fully understood from the detailed description given herein below and the accompanying drawings which are given by way of illustration only, and thus are not limitative of the present invention, and wherein:
- Fig. 1: is a schematic cross-sectional, side view of a representation of a printer according to the present invention;
- Fig. 2: is a schematic top view of a printer according to the present invention;
- Fig. 3: is a schematic workflow diagram according to the prior art;
- Fig. 4: is a schematic workflow diagram according to the present invention;
- Fig. 5A - 5B: is a schematic flow of a method according to the present invention; and
- Fig. 6: is a schematic diagram of a computer readable medium according to the present invention.

### DETAILED DESCRIPTION OF THE PREFERRED EMBODIMENTS

The present invention will now be described with reference to the accompanying drawings, wherein the same reference numerals have been used to identify the same or similar elements throughout the several views.

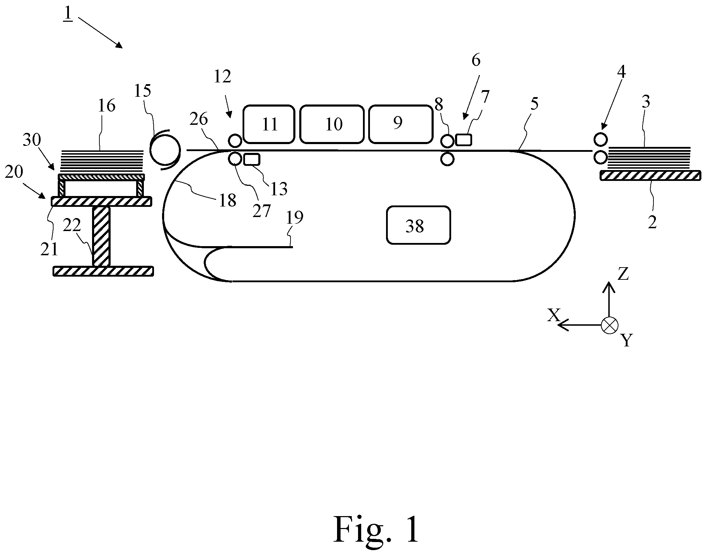

Fig. 1 illustrates a printer 1 according to the present invention. An input module 4 on the right side comprises one or more input stack supports 2 supporting at least one stack 3 of sheets. The stack supports may be pallets or print media trays. Individual sheets are separated from the stack 3 by the input module 4, which places the sheets on an input path of the printer 1. The input module 4 may comprise a separator to separate individual sheets from the stack 3. The input path brings the sheets to a print path section, illustrated as a straight, linear path, where the sheet is processed for printing thereon. The print path section comprises a switch 5 positioned at an intersection of the input path and a duplex path, which duplex path is arranged to return printed sheets to the print path. Sheets on the print path can thus be a mix of unprinted or one-side printed sheets.

The print path comprises a first registration unit 6 downstream of the switch 5. The first registration unit 6 comprises a first sheet detector 5 for detecting a position and orientation of each sheet. The orientation of the sheet is e.g. the angle of its forward facing or leading edge with respect to the transport direction X. Dependent on the measured position and orientation, the first registration unit 6 controls its registration drive 7 to position the sheet to a predefined position and/or align the sheet to a predefined orientation, for example with its leading edge perpendicular to the transport direction X, so that it will be parallel to the printhead assembly 10.

The registered sheet subsequently passes by a coater 9, which applies a liquid coating on at least a portion of the treated surface. The coater 9 may for example comprise an array of printheads configured to jet droplets of coating liquid or comprise a roller for transferring coating liquid as the roller rolls over the sheet. Any suitable coating liquid may be applied, such as for example Canon ColorGrip. The coating liquid preferably forms a continuous coat on the sheet, which enables or improves the bonding of colour inks to the sheet.

The coated sheets travels to the printhead assembly 10, which jets one or more layers of colour inks onto the coated sheet. The printhead assembly 10 is preferably a page wide array of inkjet printheads to allow productive printing.

The jetted colour inks are then fixed onto the sheet by means of a fixation unit 11. The fixation unit 11 applies or removes energy from the sheet, so that the jetted colour inks undergo a phase change. The fixation unit 11 may comprise coolers and/or heaters, such radiation heaters with e.g. UV or IR light, hot air blowers, such as impingement blowers, contact heaters, such a heated transport belt or drum, etc. Alternatively or additionally, the fixation unit 11 may comprise a curing station, which emits light with a wavelength which induces a chemical reaction in the colour inks and/or coating liquid, causing these to solidify.

At the downstream side of the print path, a second registration unit 12 is provided to adjust the position and/or orientation of the sheets. This second registration unit 12 may be configured similar to the first registration unit 6. The second registration unit 12 can be applied to position and/or orientation a sheet with respect to a specific output location, for example a stacking location. The second registration unit 12 comprises its own registration drive 27 and may comprise a sheet detector 13, or the sheet's position can be derived by tracking the sheet's movement after detection by the first sheet detector 7.

At the end of the print path, a further switch 26 is provided to selectively direct sheets into the duplex path or to the output location. The duplex path preferably comprises a turn station 19, which inverts the sheet, so that it leaves the duplex path with its unprinted side eventually facing the printhead assembly 10. The output location in Fig. 1 comprises a stacker 20, which gathers the printed sheets in a further stack 16 on a pallet 30 on a pallet support 21. The stacker 20 comprises a stacking unit 15, which receives printed sheets and positions these on top of another into the stack 16. The stacking unit 15 may in one example comprise a rotatable flipping wheel with one or more slots at its circumference for holding a leading edge of a sheet. By rotating the flipping wheel as it holds the sheet, the sheet is flipped, and then released from the slots as the leading edge of the sheet contacts a stop at the bottom side of the flipping wheel.

The pallet support 21 of the stacker 20 is provided on a lift 22, so that its position in the vertical direction Z can be adjusted. This allows the top of the stack 16 to be at the working level of the stacking unit 15 as the stack height increases. The pallet support 21 is configured for supporting a pallet 30, though it absence of a pallet it may be suited for directly stacking sheets thereon as well.

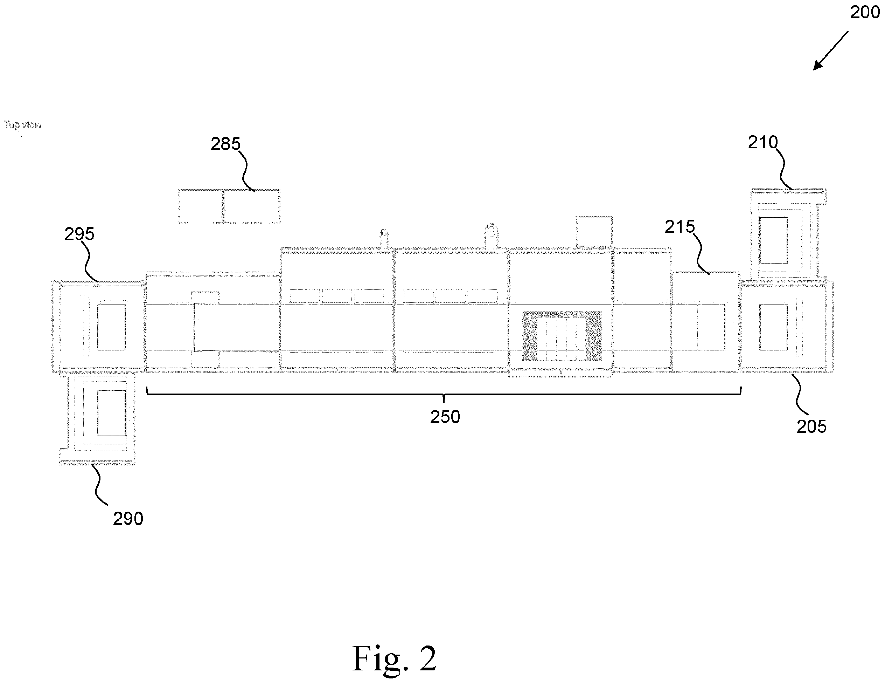

Fig. 2 shows a top view 200 of an embodiment of the printer 1 according to the present invention. The printer is configured to output stacks of printed print media. The output stack maybe placed on a pallet. The printer comprises a middle part 250 comprising the print heads, the coater, the dryer and the print path which leads from the right side of part 250 to the left side of part 250 in Fig. 2.

At the right side of Fig. 2 there are two locations 205, 210 for the output stacks to be processed. The first location 205 may contain a first pallet with a stack of sheets which is scheduled to be processed immediately when the printer is ready. The second location 210 may contain a second pallet which may contain, is currently loaded or planned to be loaded with a stack of sheets which will be processed after the processing of the first pallet at the first location 205. A transport mechanism (not shown) is configured to move the second pallet from the second location to the first location, for example an installation for automatic pallet replacement.

At the right side of Fig. 2 there is also a location 215 for one or more print media trays for holding print media to be processed by the printer 1.

At the left side of Fig. 2 there are two locations 290, 295 for the pallets which are configured to gather processed sheets which are received from the left side of the middle part 250 of printer 1. A user interface 285 is positioned near the printer 1 and wired or wireless connected to the printer 1. In another embodiment the user interface is built in or attached to the printer 1.

User interface windows are presented to the operator at the user interface 285 of the printer 1. In another embodiment the user interface windows are displayed on a remote and/or mobile device such as a pc, a laptop, a smart phone, a tablet computer, etc., which is digitally - wired or wireless - connected to the printer 1. With a dynamic user interface the user interface windows can be displayed anywhere, at the printer and a user workplace via a web user interface.

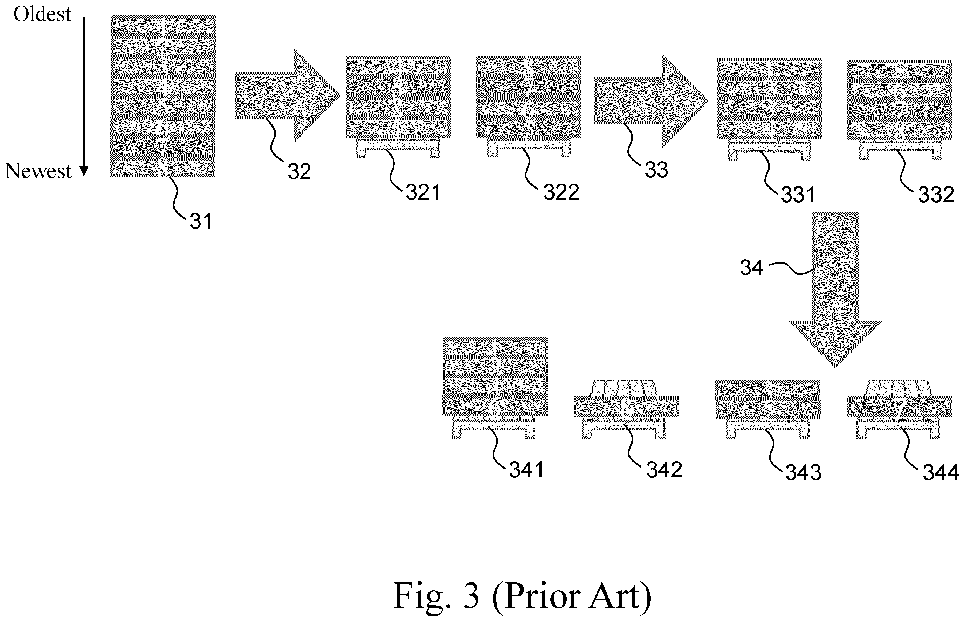

Fig. 3 shows an approach of composing a print batch based on the media properties of the print media to be used according to known prior art. The printer 1 has a print job queue 31 which comprises the received print jobs from the oldest to the newest. The print controller provides a plain mapping 32 to map the output of the print jobs in the queue to output stacks 321, 322 on pallets. Then the print controller provide a reordering 33 wherein the oldest print job is planned at the top of the output stacks 331, 332. Then the print controller provides a batching 34 on standard media properties like a kind of media, a size of media, a thickness of media, a weight of media, etc. The batching 34 leads to the final result of output stacks 341 - 344. According to the prior art the operator is bothered with the plain mapping 32 and also the reordering 33 of the output stacks.

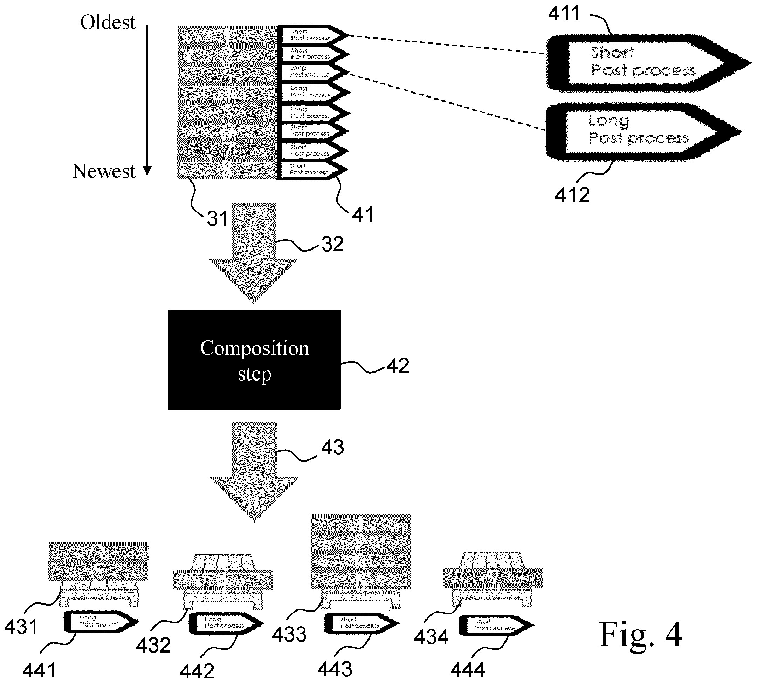

Fig. 4 shows an approach of sequencing composed print batches in the form of output stacks according to the present invention.

Now the received print jobs in the print job queue 31 are provided with a digital label item 41. For example a digital label item 411 for a print job with a short post process and a digital label item 412 for a print job with a long post process are provided, i.e. attached to the print job ticket. Again the plain mapping 32 and a composition step 42 comprising the previous reordering step 33 and the previous batching step 34 are provided. The final step 43 is now provided to reorder again the print jobs to the output stacks 431 - 434 based on the contents of the digital label items 441 - 444 of each print job. According to the present invention entry point for the sequencing of the output stacks 431 - 434 is the grouping of the print jobs with the same digital label items. Thereinafter subgrouping by media properties may also be used.

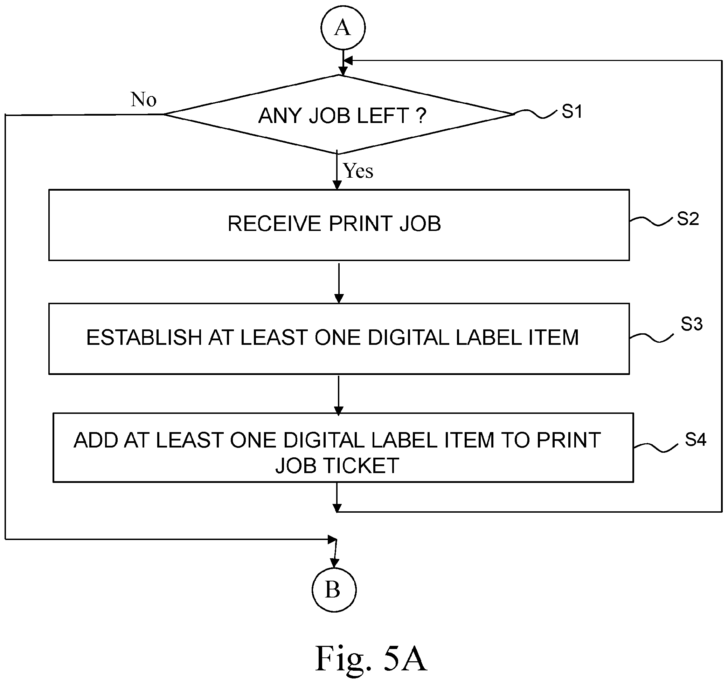

Fig. 5A - 5B is a flow diagram of the method according to the present invention. Print jobs are printed by a printer configured to output stacks of printed print media and comprising a print controller comprising a print job waiting room and a print job queue. The method may be applied to the print jobs in the print job queue, or the method may be applied to the print jobs in the waiting room, or the method may be applied to the print jobs which are either in the print job queue or in the waiting room. The method starts in a start point A in Fig. 5A which leads to a first step S1.

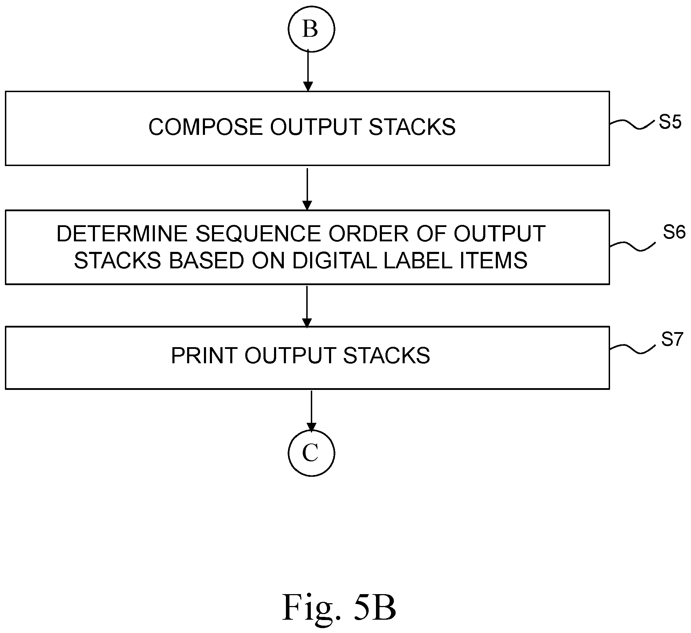

In the first step S1 it is checked if there are any print jobs left to be provided with digital label items according to the present invention. If so, the method proceeds to a second step S2. If not, the method proceeds to an intermediate point B which leads to a fifth step S5 in Fig. 5B. When an operator in the meanwhile manually changes a digital label item the first step S1 should be repeated because in said case the outcome of the steps S2 - S4 may become different.

The 3 steps S2 - S4 in Fig. 5A are performed for each print job to be planned to be printed.

In the second step S2 the print job is received in the print job waiting room or the print job queue. The print job has a print job ticket with print job properties.

In a third step S3 at least one digital label item is established for the print job. The at least one digital label item is used to create a group of print jobs.

In a fourth step S4 the at least one established digital label item is added to the print job ticket. The method returns to the first step S1.

In the fifth step S5 for at least one set of at least one digital label item at least one output stack of print media is composed for print jobs in the print job waiting room or print job queue having at least one same set of at least one digital label item, i.e. having a same value of the digital label item. One or more sets may be composed which depends on the user needs. The one or more sets may be composed automatically or via user input by means of a local or remote user interface.

In a sixth step S6 a time sequence order of composed output stacks for printing by the printer is determined based on the digital label items.

In a seventh step S7 the output stacks are printed in the determined time sequence order.

The method ends in an end point C.

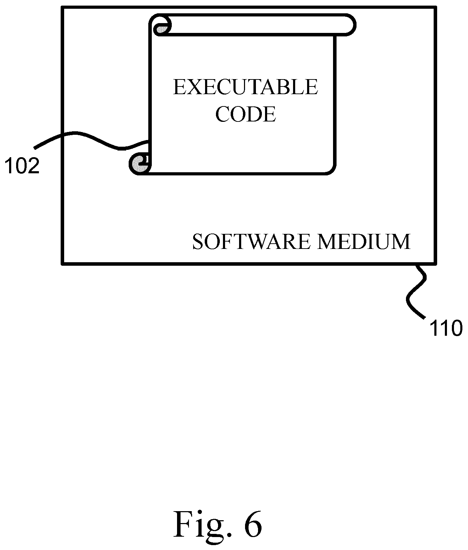

Fig. 6 schematically shows a non-transitory software medium 110 according to the invention. The software medium 110 comprises executable code 102 configured to, when executed, perform the method according to the invention, e.g. as described with respect to either the printer shown in Fig. 1 - 2 or the method shown in Fig. 5A - 5B and/or according to any of the variants and modifications of the printer and/or of the method described hereinbefore.

The non-transitory software medium 110 may, specifically, be formed as a CD or a CD-ROM, a DVD or a DVD-ROM, a Blu Ray disc or a Blu Ray-ROM disc, a magnetic hard drive, a solid state disk (SSD) hard drive, a USB memory device and so on.

Although specific embodiments of the invention are illustrated and described herein, it will be appreciated by those of ordinary skill in the art that a variety of alternate and/or equivalent implementations exist. It should be appreciated that the exemplary embodiment or exemplary embodiments are examples only and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

It will also be appreciated that in this document the terms "comprise", "comprising", "include", "including", "contain", "containing", "have", "having", and any variations thereof, are intended to be understood in an inclusive (i.e. non-exclusive) sense, such that the process, method, device, apparatus or system described herein is not limited to those features or parts or elements or steps recited but may include other elements, features, parts or steps not expressly listed or inherent to such process, method, article, or apparatus. Furthermore, the terms "a" and "an" used herein are intended to be understood as meaning one or more unless explicitly stated otherwise. Moreover, the terms "first", "second", "third", etc. are used merely as labels, and are not intended to impose numerical requirements on or to establish a certain ranking of importance of their objects.

The present invention being thus described, it will be obvious that the same may be varied in many ways. Such variations are not to be regarded as a departure from the spirit and scope of the present invention, and all such modifications as would be obvious to one skilled in the art are intended to be included within the scope of the following claims.

## Claims

1. A method for labelling print jobs to be printed by a printer configured to output stacks of printed print media and comprising a print controller comprising a print job waiting room and a print job queue, **characterized in that** the method comprises the steps of
for each print job
- receiving the print job in the print job waiting room or the print job queue, the print job having a print job ticket with print job properties,
- establishing at least one digital label item for the print job, the at least one digital label item being used to create a group of print jobs, and
- adding the at least one established digital label item to the print job ticket, and
for at least one set of at least one digital label item,
- composing at least one output stack of print media for print jobs in the print job waiting room or print job queue having at least one same at least one set of the at least one digital label item, and
determining a time sequence order of composed output stacks for printing by the printer based on the digital label items, and
printing the output stacks in the determined time sequence order.

2. A method according to claim 1, wherein the step of determining a time sequence order of composed output stacks for printing by the printer based on the digital label items comprises the sub-step of keeping the composed output stacks having at least one same digital label item together.

3. A method according to claim 1 or 2, wherein the step of establishing the at least one digital label item comprises the sub-step of setting the at least one digital label item by means of an automated workflow.

4. A method according to any of the preceding claims, wherein the step of establishing the at least one digital label item comprises a sub-step of taking a post-processing action of the print job, a post-processing device for executing the post-processing action of the print job, an end product of the print job, an application type of the end product, a service level agreement and/or an internet source from which a print job is submitted, into account.

5. A method according to any of the preceding claims, wherein the step of establishing the at least one digital label item comprises a sub-step of taking a duration of a post-processing action and/or a transport for the print job into account.

6. A method according to any of the preceding claims, wherein the step of determining the time sequence order of output stacks comprises a sub-step of entering an output stack which needs to be post-processed with a particular post-processing duration in time before an output stack which needs to be post-processed with a shorter post-processing duration than the particular post-processing duration, in the time sequence order of output stacks.

7. A method according to any of the preceding claims, wherein the step of determining the time sequence order of output stacks comprises a sub-step of entering an output stack which needs to be transported or delivered with a particular transport or delivery duration in time before an output stack which needs to be transported or delivered with a shorter transport or delivery duration than the particular transport or delivery duration, in the time sequence order of output stacks.

8. A method according to any of the preceding claims, wherein the step of establishing the at least one digital label item comprises the sub-step of receiving the at least one digital label item via a user interface of the printer.

9. A method according to any of the claims 1 - 7, wherein the step of establishing the at least one digital label item comprises the sub-step of the print controller automatically determining the at least one digital label item based on the print job properties in the print job ticket.

10. A method according to any of the preceding claims, wherein the method comprises the step of messaging a user to provide an advice or warning regarding the determined time sequence order of composed output stacks for printing by the printer based on the digital label items.

11. A printer configured to output stacks of printed print media and comprising a print controller comprising a print job waiting room and a print job queue, wherein the print controller is configured to perform the steps of a method according to any of the preceding claims.

12. A computer program product, including computer readable code embodied on a computer readable medium, said computer readable code comprising instructions for executing the steps of a method according to any of the claims 1 - 10 by means of a printer according to claim 11.
